# EUROPEAN PATENT APPLICATION

(11) **EP 4 357 732 A1**
(43) Date of publication of application: **24.04.2024**
(21) Application number: 23204321.6
(22) Date of filing: 18.10.2023
(51) Int. Cl.: G01C 21/00, G06V 20/56

(54) **METHOD AND SYSTEM FOR GENERATING VIRTUAL ENVIRONMENT TO VERIFY AUTONOMOUS DRIVING SERVICE**

(30) Priority: 19.10.2022 KR 20220135009
(71) Applicant: Morai Inc., Seoul 06168 (KR)
(72) Inventor: JUNG, Jiwon, 06168 Seoul (KR); HONG, Jun, 06168 Seoul (KR)
(74) Representative: Studio Torta S.p.A.

(57) **Abstract**

Provided is a method for generating a virtual environment to verify autonomous driving service, which is executed by one or more processors and includes generating a high-precision road map of a specific area using a Mobile Mapping System, generating a first mesh associated with a road in the specific area based on point cloud data of the generated high-precision road map, generating a second mesh associated with a terrain of the specific area, and generating a virtual environment by matching the first mesh and the second mesh.

## Description

### Technical Field

The disclosure relates to a method and system for generating a virtual environment to verify autonomous driving service, and specifically, to a method and system for extracting mesh data based on point cloud data extracted from a high-precision road map and matching the mesh data to generate a virtual environment.

### Background Art

With the advent of the 4th Industrial Revolution, autonomous driving has emerged as a solution to various problems such as sustainable development, and is achieving full-fledged growth. The development of autonomous driving technology has a significant ripple effect on our urban environment and quality of life, and therefore governments and companies around the world have selected the autonomous driving industry as a new growth engine and are conducting active research and development. However, as the spread of self-driving vehicles increases, safety and reliability problems of the self-driving vehicles are arising because the vehicle's driving ability is not sufficiently verified in various situations that may occur.

This indicates the need for thorough verification of numerous scenarios that may occur before multiple autonomous vehicles operate on real roads. However, there are time and cost constraints to actually verify autonomous driving systems. In addition, when verifying the autonomous driving systems through simulation, various data sets such as high-precision road maps, digital topographic maps, and 3D object models are required, and it is necessary to change the data model to build a simulation environment similar to reality. Additionally, since manual work is performed to match and build the data required as described above, it requires a lot of time and money to diversify the virtual environment.

### SUMMARY

### Technical Problem

In order to solve the problems described above, the present disclosure provides a method and device (system) for generating a virtual environment to verify autonomous driving service.

### Technical Solution

The present disclosure may be implemented in a variety of ways, including a method, a device (system) or a computer program stored in a readable storage medium.

A method for generating a virtual environment to verify autonomous driving service may include generating a high-precision road map of a specific area using a Mobile Mapping System, generating a first mesh associated with a road in the specific area based on point cloud data of the generated high-precision road map, generating a second mesh associated with a terrain of the specific area, and generating a virtual environment by matching the first mesh and the second mesh.

The first mesh may include a mesh associated with a vehicle travel path and a mesh associated with a lane of the vehicle travel path.

The generating the first mesh associated with the road in the specific area based on the point cloud data of the generated high-precision road map may include generating the first mesh by overlaying the mesh associated with the lane of the vehicle travel path on the mesh associated with the vehicle travel path.

The generating the virtual environment by matching the first mesh and the second mesh may include generating a virtual environment by matching a mesh associated with a structure in the specific area with the first mesh and the second mesh, and the mesh associated with the structure in the specific area may be generated based on 3D object model information and location information of the structure.

A system for generating a virtual environment to verify autonomous driving service is provided. This system may include a communication module, a memory, a display, and one or more processors connected to the memory and configured to execute one or more computer-readable programs included in the memory, in which the one or more programs may include instructions for generating a high-precision road map of a specific area using a Mobile Mapping System, generating a first mesh associated with a road in the specific area based on point cloud data of the generated high-precision road map, generating a second mesh associated with a terrain of the specific area, and generating a virtual environment by matching the first mesh and the second mesh.

### Advantageous Effects

According to various examples of the present disclosure, it is possible to easily build virtual environments in various geographic environments while reducing the time and cost for generating the virtual environment. Accordingly, it is possible to advance autonomous driving technology by verifying the capabilities of autonomous vehicles in various regions.

The effects of the present disclosure are not limited to the effects described above, and other effects not described herein can be clearly understood by those of ordinary skill in the art (referred to as "ordinary technician") from the description of the claims.

### BRIEF DESCRIPTION OF THE DRAWINGS

The above and other objects, features and advantages of the present disclosure will be described with reference to the accompanying drawings described below, where similar reference numerals indicate similar elements, but not limited thereto, in which:
FIG. 1 illustrates an example of generating a virtual environment to verify autonomous driving service;
FIG. 2 is a schematic diagram illustrating a configuration in which an information processing system is communicatively connected to a plurality of user terminals to generate a virtual environment;
FIG. 3 is a block diagram of an internal configuration of the user terminal and the information processing system;
FIG. 4 illustrates examples of a virtual environment generated by matching a plurality of meshes;
FIG. 5 is a flowchart illustrating an example of generating a virtual environment; and
FIG. 6 is a flowchart illustrating an example of a method for generating a virtual environment to verify autonomous driving service.

### DETAILED DESCRIPTION OF THE INVENTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "unit" used herein refers to a software or hardware component, and "module" or "unit" performs certain roles. However, the meaning of the "module" or "unit" is not limited to software or hardware. The "module" or "unit" may be configured to be in an addressable storage medium or configured to play one or more processors. Accordingly, as an example, the "module" or "unit" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "units" may be combined into a smaller number of components and "modules" or "units", or further divided into additional components and "modules" or "units."

The "module" or "unit" may be implemented as a processor and a memory. The "processor" should be interpreted broadly to encompass a general-purpose processor, a Central Processing Unit (CPU), a microprocessor, a Digital Signal Processor (DSP), a controller, a microcontroller, a state machine, and so forth. Under some circumstances, the "processor" may refer to an application-specific integrated circuit (ASIC), a programmable logic device (PLD), a field-programmable gate array (FPGA), etc. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. The memory is said to be in electronic communication with a processor if the processor can read information from and/or write information to the memory. The memory integrated with the processor is in electronic communication with the processor.

In the present disclosure, a "system" may refer to at least one of a server device and a cloud device, but is not limited thereto. For example, the system may include one or more server devices. In another example, the system may include one or more cloud devices. In still another example, the system may include both the server device and the cloud device operated in conjunction with each other.

In the present disclosure, a "display" may refer to any display device associated with a computing device, and for example, it may refer to any display device that is controlled by the computing device, or that can display any information/data provided from the computing device.

In the present disclosure, "each of a plurality of A" may refer to each of all components included in the plurality of A, or may refer to each of some of the components included in a plurality of A.

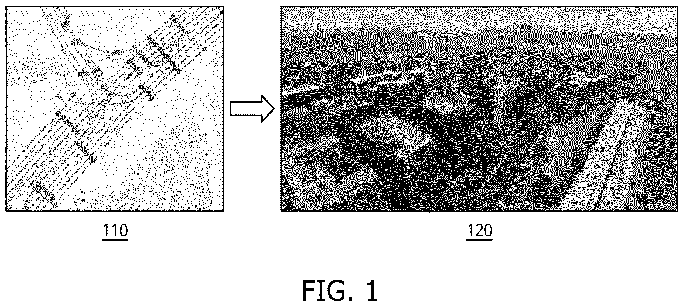

FIG. 1 illustrates an example of generating a virtual environment 120 to verify autonomous driving service. A high-precision road map 110 may refer to map data obtained by converting, into data, major elements of an actual road required for autonomous driving, such as driving route points, road characteristics, and objects around the road. Building the high-precision road map 110 involves the use of Mobile Mapping System (MMS) equipment. The MMS equipment may be equipped with sensors such as navigation satellite system (GNSS), inertial navigation system (INS), driving distance sensor (DMI), and LiDAR camera on moving objects such as vehicles so as to acquire the location and visual information of the road surface and surrounding terrain features. The high-precision road map 110 built in this way may include vector file point cloud data including geometric location information, attribute information, etc., image data, GNSS reception information, reference points, etc. In addition, the high-precision road map 110 may include information associated with at least one of a driving route, traffic signs, or signal cycles.

The point cloud data of the generated high-precision road map 110 may be extracted. A first mesh associated with roads in a specific area may be generated based on the extracted point cloud data. The first mesh may include a mesh associated with the vehicle travel path, and a mesh associated with a lane of the vehicle travel path. The mesh associated with the vehicle travel path may be a mesh representing the outline of a vehicle travel road in a specific area generated based on the point cloud data. In addition, the mesh associated with the lane of the vehicle travel path may be a mesh representing the lane of the vehicle travel road in a specific area generated based on the point cloud data. In addition, the color of the vehicle travel lane represented by the mesh associated with the lane of the vehicle travel path may be changed to a color corresponding to the type of the lane.

A second mesh associated with the terrain of a specific area may be generated. The second mesh may be generated based on a digital elevation model and satellite orthoimagery. Specifically, contour data of a digital topographic map may be converted into digital elevation model information. In addition, a second mesh representing topographic information of the virtual environment 120 may be generated by matching the satellite orthoimagery and the digital elevation model information.

The virtual environment 120 may be generated by matching the first mesh and the second mesh. In this case, a mesh associated with structures in a specific area may also be matched to generate the virtual environment 120. The mesh associated with the structure in the specific area may be generated based on 3D object model information of the structure and location information of the structure.

Through this configuration, it is possible to easily build virtual environments in various geographic environments while reducing the time and cost for generating the virtual environment. Accordingly, it is possible to advance autonomous driving technology by verifying the capabilities of autonomous vehicles in various regions.

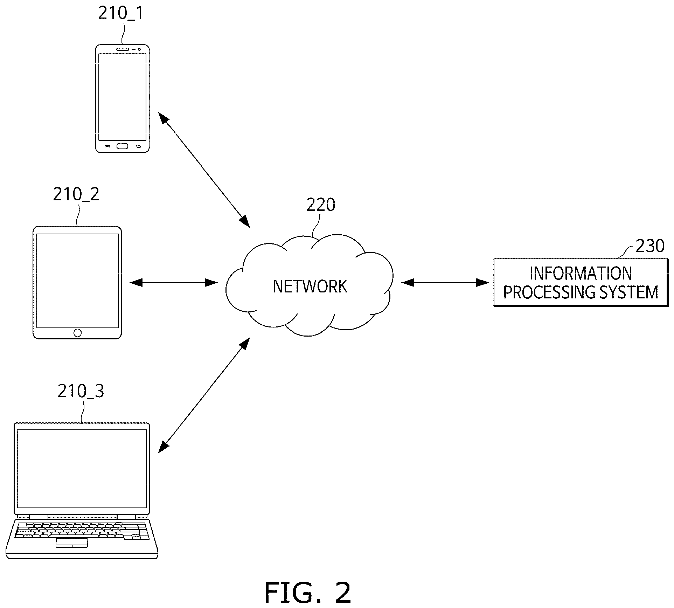

FIG. 2 is a schematic diagram illustrating a configuration in which an information processing system 230 is communicatively connected to a plurality of user terminals 210_1, 210_2, and 210_3 to generate a virtual environment. As shown, the plurality of user terminals 210_1, 210_2, and 210_3 may be connected to the information processing system 230 capable of providing a service for generating virtual environment through a network 220. The plurality of user terminals 210_1, 210_2, and 210_3 may include terminals of users who are provided with the service for generating virtual environment.

The information processing system 230 may include one or more server devices and/or databases, or one or more distributed computing devices and/or distributed databases based on cloud computing services capable of storing, providing and executing computer-executable programs (e.g., downloadable applications) and data associated with the provision of a service for generating virtual environment, etc.

The service for generating virtual environment provided by the information processing system 230 may be provided to the user through an application of service for generating virtual environment or web browser extension program installed on each of the plurality of user terminals 210_1, 210_2, and 210_3. For example, the information processing system 230 may provide information or perform process corresponding to a request for generating virtual environment received from the user terminals 210_1, 210_2, and 210_3 through the application of service for generating virtual environment.

The plurality of user terminals 210_1, 210_2, and 210_3 may communicate with the information processing system 230 through the network 220. The network 220 may be configured to enable communication between the plurality of user terminals 210_1, 210_2, and 210_3 and the information processing system 230. The network 220 may be configured as a wired network such as Ethernet, a wired home network (Power Line Communication), a telephone line communication device and RS-serial communication, a wireless network such as a mobile communication network, a wireless LAN (WLAN), Wi-Fi, Bluetooth, and ZigBee, or a combination thereof, depending on the installation environment. The method of communication may include a communication method using a communication network (e.g., mobile communication network, wired Internet, wireless Internet, broadcasting network, satellite network, etc.) that may be included in the network 220 as well as short-range wireless communication between the user terminals 210_1, 210_2, and 210_3, but aspects are not limited thereto.

In FIG. 2, the mobile phone terminal 210_1, the tablet terminal 210_2, and the PC terminal 210_3 are illustrated as the examples of the user terminals, but aspects are not limited thereto, and the user terminals 210_1, 210_2, and 210_3 may be any computing device that is capable of wired and/or wireless communication and that can be installed with the application of service for generating virtual environment, the web browser, or the like and execute the same. For example, the user terminal may include an AI speaker, a smart phone, a mobile phone, a navigation, a computer, a notebook, a digital broadcasting terminal, a personal digital assistant (PDA), a portable multimedia player (PMP), a tablet PC, a game console, a wearable device, an internet of things (IoT) device, a virtual reality (VR) device, an augmented reality (AR) device, a set-top box, etc. In addition, FIG. 2 illustrates that three user terminals 210_1, 210_2, and 210_3 are in communication with the information processing system 230 through the network 220, but aspects are not limited thereto, and a different number of user terminals may be configured to be in communication with the information processing system 230 through the network 220.

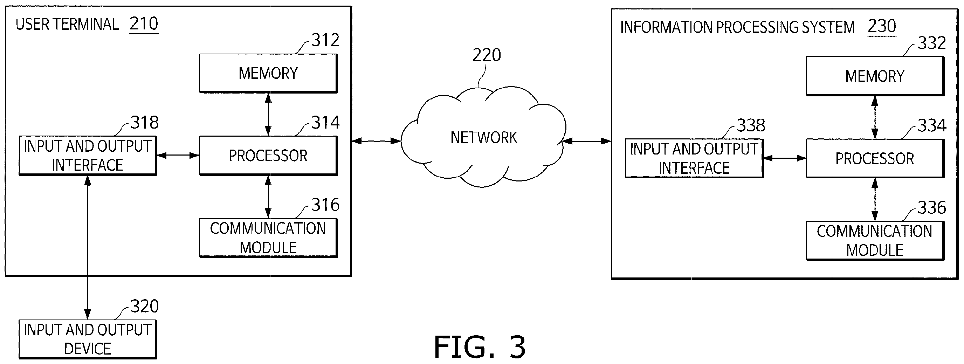

FIG. 3 is a block diagram of an internal configuration of a user terminal 210 and the information processing system 230. The user terminal 210 may refer to any computing device that is capable of executing the application, web browsers, etc., and also capable of wired/wireless communication, and may include the mobile phone terminal 210_1, the tablet terminal 210_2, and the PC terminal 210_3 of FIG. 2, for example. As illustrated, the user terminal 210 may include a memory 312, a processor 314, a communication module 316, and an input and output interface 318. Likewise, the information processing system 230 may include a memory 332, a processor 334, a communication module 336, and an input and output interface 338. As illustrated in FIG. 3, the user terminal 210 and the information processing system 230 may be configured to communicate information, data, etc. through the network 220 using the respective communication modules 316 and 336. In addition, an input and output device 320 may be configured to input information, data, etc. to the user terminal 210, or output information, data, etc. generated from the user terminal 210 through the input and output interface 318.

The memories 312 and 332 may include any non-transitory computer-readable recording medium. The memories 312 and 332 may include a permanent mass storage device such as read only memory (ROM), disk drive, solid state drive (SSD), flash memory, etc. As another example, a non-destructive mass storage device such as ROM, SSD, flash memory, disk drive, etc. may be included in the user terminal 210 or the information processing system 230 as a separate permanent storage device that is distinct from the memory. In addition, an operating system and at least one program code may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include a computer-readable recording medium such as a floppy drive, a disk, a tape, a DVD/CD-ROM drive, a memory card, etc., for example. As another example, the software components may be loaded into the memories 312 and 332 through the communication modules 316 and 336 rather than the computer-readable recording medium. For example, at least one program may be loaded into the memories 312 and 332 based on a computer program installed by files provided by developers or a file distribution system that distributes an installation file of an application via the network 220.

The processors 314 and 334 may be configured to process the instructions of the computer program by performing basic arithmetic, logic, and input and output operations. The instructions may be provided to the processors 314 and 334 from the memories 312 and 332 or the communication modules 316 and 336. For example, the processors 314 and 334 may be configured to execute the received instructions according to a program code stored in a recording device such as the memories 312 and 332.

The communication modules 316 and 336 may provide a configuration or function for the user terminal 210 and the information processing system 230 to communicate with each other through the network 220, and may provide a configuration or function for the user terminal 210, the information processing system 230, etc. to communicate with another user terminal or another system (e.g., a separate cloud system, etc.). For example, a request or data (e.g., a request to generate virtual environment, etc.) generated by the processor 314 of the user terminal 210 according to the program code stored in the recording device such as the memory 312, etc. may be transmitted to the information processing system 230 via the network 220 under the control of the communication module 316. Conversely, a control signal or command provided under the control of the processor 334 of the information processing system 230 may be received by the user terminal 210 through the communication module 316 of the user terminal 210 through the communication module 336 and the network 220.

The input and output interface 318 may be a means for interfacing with the input and output device 320. As an example, the input device may include a device such as a camera including an audio sensor and/or an image sensor, a keyboard, a microphone, a mouse, etc., and the output device may include a device such as a display, a speaker, a haptic feedback device, etc. As another example, the input and output interface 318 may be a means for interfacing with a device such as a touch screen, etc. that integrates a configuration or function for performing inputting and outputting. For example, when the processor 314 of the user terminal 210 processes the instructions of the computer program loaded into the memory 312, a service screen, etc., which is configured with the information, data, etc. provided by the information processing system 230 or another user terminals, may be displayed on the display via the input and output interface 318. While FIG. 3 illustrates that the input and output device 320 is not included in the user terminal 210, aspects are not limited thereto, and an input and output device may be configured as one device with the user terminal 210. In addition, the input and output interface 338 of the information processing system 230 may be a means for interfacing with a device (not illustrated) for inputting or outputting that may be connected to, or included in the information processing system 230. While FIG. 3 illustrates the input and output interfaces 318 and 338 as the components configured separately from the processors 314 and 334, aspects are not limited thereto, and the input and output interfaces 318 and 338 may be configured to be included in the processors 314 and 334.

The user terminal 210 and the information processing system 230 may include more components than the components illustrated in FIG. 3. Meanwhile, most of the related components may not necessarily require exact illustration. The user terminal 210 may be implemented to include at least a part of the input and output device 320 described above. In addition, the user terminal 210 may further include other components such as a transceiver, a Global Positioning System (GPS) module, a camera, various sensors, a database, etc. For example, if the user terminal 210 is a smartphone, it may generally include components included in the smartphone, and for example, it may be implemented such that various components such as an acceleration sensor, a gyro sensor, a microphone module, a camera module, various physical buttons, buttons using a touch panel, input and output ports, a vibrator for vibration, etc. are further included in the user terminal 210.

While a program for the application of service for generating virtual environment is running, the processor 314 may be configured to receive text, image, video, audio, and/or action, etc. inputted or selected through the input device such as a camera, a microphone, etc., that includes a touch screen, a keyboard, an audio sensor and/or an image sensor connected to the input and output interface 318, and store the received text, image, video, audio, and/or action, etc. in the memory 312, or provide the same to the information processing system 230 through the communication module 316 and the network 220.

The processor 314 of the user terminal 210 may be configured to manage, process and/or store the information, data, etc. received from the input and output device 320, another user terminal, the information processing system 230, a plurality of external systems, etc. The information, data, etc. processed by the processor 314 may be provided to the information processing system 230 via the communication module 316 and the network 220. The processor 314 of the user terminal 210 may transmit the information, data, etc. to the input and output device 320 via the input and output interface 318 to output the same. For example, the processor 314 may display the received information, data, etc. on a screen of the user terminal 210.

The processor 334 of the information processing system 230 may be configured to manage, process, and/or store information, data, etc. received from a plurality of user terminals 210, a plurality of external systems, etc. The information, data, etc. processed by the processor 334 may be provided to the user terminals 210 via the communication module 336 and the network 220.

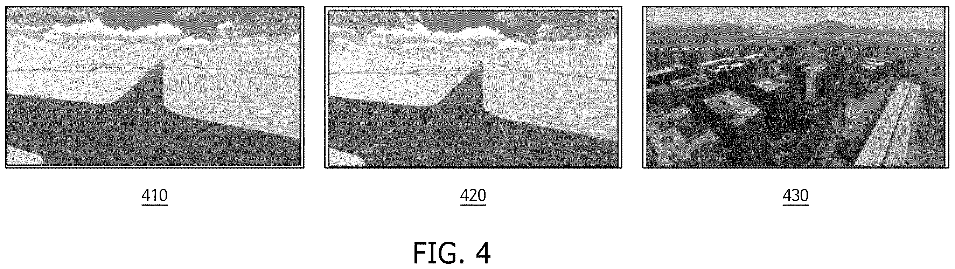

FIG. 4 illustrates examples of a virtual environment 430 generated by matching a plurality of meshes 410 and 420. In order to generate a virtual environment, point cloud data may be extracted from a high-precision road map. Based on the extracted point cloud data, a mesh that implements detailed surface of the road and represents the environment surrounding the road may be generated.

The mesh (or road mesh) 410 associated with the vehicle travel path and the mesh (or lane mesh) 420 associated with the lane of the vehicle travel path may be generated based on the point cloud data of the high-precision road map. The road mesh 410 may represent a road generated using the road outline of the high-precision road map. In addition, the lane mesh 420 may be matched with each load mesh 410 by being overlaid thereon, using a 3D modeling tool. In this case, the lane mesh 420 may automatically generate a color corresponding to the type of driving lane (e.g., solid line, dotted line, double line, single line, etc.).

A mesh (or terrain mesh) associated with the terrain of a specific area may be generated. Specifically, contour data of a digital topographic map may be converted into digital elevation model information. In addition, a terrain mesh representing topographic information of the virtual environment 120 may be generated by matching the satellite orthoimagery and the digital elevation model information.

The road mesh 410, the lane mesh 420, and the terrain mesh may be matched to generate the virtual environment 430. In this case, a mesh associated with structures around the road may be matched to generate the realistic virtual environment 430. The mesh associated with the structures around the road may be generated based on the 3D object model information of the structures and the location information of the structures.

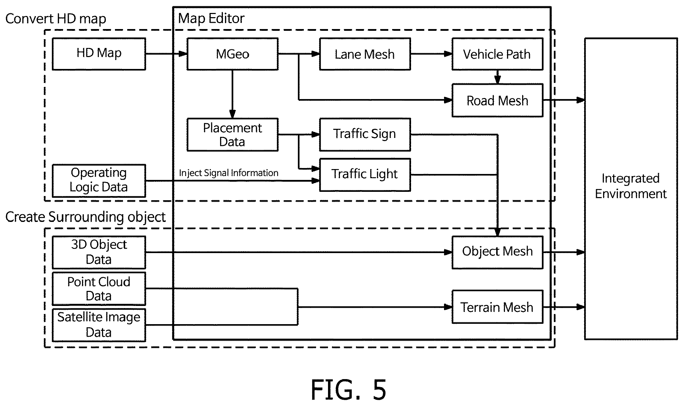

FIG. 5 is a flowchart illustrating an example of generating a virtual environment. Information for generating virtual environment may be extracted from a high-definition map (HD map). The high-precision map may be converted into "Mgeo", a common high-precision road map format, so as to solve compatibility issues between high-precision road maps. The road mesh associated with the vehicle travel path and the lane mesh associated with the lanes of the vehicle travel path may be generated based on the point cloud data of the high-precision road map. The color of the vehicle path lane of the lane mesh may be automatically changed according to the type of lane. In addition, the lane mesh may be matched with the road mesh by being overlaid thereon.

Placement data may be extracted from the high-precision road map. In this case, data associated with the traffic sign may be generated based on the placement data. In addition, data associated with traffic lights may be generated from operating logic data and deployment data. An object mesh may be generated using the data associated with the traffic signs and the traffic lights, and 3D object data.

The point cloud data extracted from the high-precision road map may include precise 3D spatial information. A terrain mesh representing the topographic information of the virtual environment may be generated by matching information of a digital elevation model generated using the point cloud data and the contour data of the digital topographic map and the satellite orthoimagery image data.

The meshes may be matched to generate a virtual environment. Specifically, a realistic virtual environment may be generated by matching the road mesh overlaid with the lane mesh, the object mesh, and the terrain mesh.

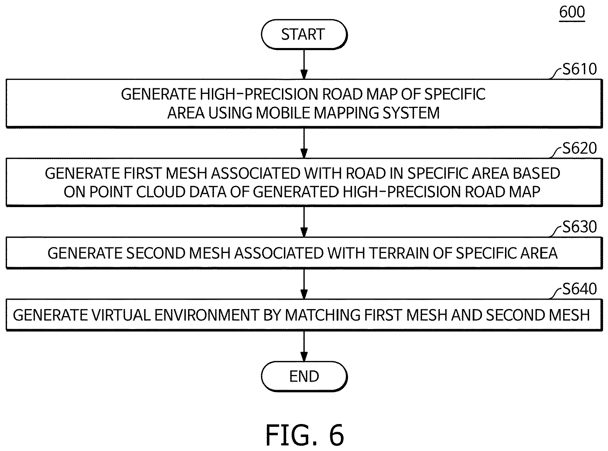

FIG. 6 is a flowchart illustrating an example of a method 600 for generating a virtual environment to verify autonomous driving service. The method 600 may be performed by one or more processors. The method 600 may begin by the processor generating a high-precision road map of a specific area using a mobile mapping system, at S610.

The processor may generate a first mesh associated with the road in a specific area based on point cloud data of the generated high-precision road map, at S620. The first mesh may include a mesh associated with a vehicle travel path and a mesh associated with a lane of the vehicle travel path. In addition, the processor may generate a first mesh by overlaying the mesh associated with the lane of the vehicle travel path on the mesh associated with the vehicle travel path.

The processor may generate a second mesh associated with the terrain of the specific area, at S630. The processor may generate a virtual environment by matching the first mesh and the second mesh, at S640. In this case, the processor may match the mesh associated with the structure in the specific area with the first mesh and the second mesh so as to generate a virtual environment. A mesh associated with a structure in the specific area may be generated based on 3D object model information and location information of the structure.

The method described above may be provided as a computer program stored in a computer-readable recording medium for execution on a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies depending on design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

When implemented in software, the techniques may be stored on a computer-readable medium as one or more instructions or codes, or may be transmitted through a computer-readable medium. The computer-readable media include both the computer storage media and the communication media including any medium that facilitates the transmission of a computer program from one place to another. The storage media may also be any available media that may be accessible to a computer. By way of non-limiting example, such a computer-readable medium may include RAM, ROM, EEPROM, CD-ROM or other optical disk storage, magnetic disk storage or other magnetic storage devices, or any other media that can be used to transmit or store desired program code in the form of instructions or data structures and can be accessible to a computer. In addition, any connection is properly executable by the computer-readable medium.

For example, if the software is sent from a website, server, or other remote sources using coaxial cable, fiber optic cable, twisted pair, digital subscriber line (DSL), or wireless technologies such as infrared, wireless, and microwave, the coaxial cable, the fiber optic cable, the twisted pair, the digital subscriber line, or the wireless technologies such as infrared, wireless, and microwave are included within the definition of the medium. The disks and the discs used herein include CDs, laser disks, optical disks, digital versatile discs (DVDs), floppy disks, and Blu-ray disks, where disks usually magnetically reproduce data, while discs optically reproduce data using a laser. The combinations described above should also be included within the scope of the computer-readable media.

The software module may reside in RAM memory, flash memory, ROM memory, EPROM memory, EEPROM memory, registers, hard disk, removable disk, CD-ROM, or any other form of storage medium known. An exemplary storage medium may be connected to the processor such that the processor may read or write information from or to the storage medium. Alternatively, the storage medium may be integrated into the processor. The processor and the storage medium may exist in the ASIC. The ASIC may exist in the user terminal. Alternatively, the processor and storage medium may exist as separate components in the user terminal.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or devices, and storage may be similarly influenced across a plurality of devices. Such devices may include PCs, network servers, and portable devices.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method performed by one or more processors, the method comprising:
generating, using a mobile mapping system, a road map (110) of a specific area (S610);
generating, based on point cloud data of the road map (110), a first mesh associated with a road in the specific area (S620);
generating a second mesh associated with a terrain of the specific area (S630); and
generating, by matching the first mesh and the second mesh, a virtual environment (120) for verifying an autonomous driving service (S640).

2. The method according to claim 1, wherein the first mesh comprises a mesh (410) associated with a vehicle travel path and a mesh (420) associated with a lane of the vehicle travel path.

3. The method according to claim 2, wherein the generating the first mesh associated with the road in the specific area (S620) comprises generating the first mesh by overlaying the mesh (420) associated with the lane of the vehicle travel path on the mesh (410) associated with the vehicle travel path.

4. The method according to claim 1, wherein the generating the virtual environment (120) (S640) comprises generating the virtual environment (120) by matching a mesh associated with a structure in the specific area with the first mesh and the second mesh, and
wherein the mesh associated with the structure in the specific area is generated based on three-dimensional (3D) object model information of the structure and location information of the structure.

5. A system comprising:
a communication device;
a memory storing one or more computer-readable programs;
a display; and
one or more processors coupled to the memory,
wherein the one or more computer-readable programs comprise instructions that, when executed by the one or more processors, cause the system to:
generate, using a mobile mapping system, a road map (110) of a specific area;
generate, based on point cloud data of the road map (110), a first mesh associated with a road in the specific area;
generate a second mesh associated with a terrain of the specific area; and
generate, by matching the first mesh and the second mesh, a virtual environment (120) for verifying an autonomous driving service.

6. The system according to claim 5, wherein the first mesh comprises a mesh (410) associated with a vehicle travel path and a mesh (420) associated with a lane of the vehicle travel path.

7. The system according to claim 6, wherein the instructions, when executed by the one or more processors, cause the system to generate the first mesh associated with the road in the specific area by overlaying the mesh (420) associated with the lane of the vehicle travel path on the mesh (410) associated with the vehicle travel path.

8. The system according to claim 5, wherein the instructions, when executed by the one or more processors, cause the system to:
generate, based on three-dimensional (3D) object model information of a structure and location information of the structure, a mesh associated with the structure in the specific area; and
generate the virtual environment (120) by matching the mesh associated with the structure in the specific area with the first mesh and the second mesh.
